# EUROPEAN PATENT SPECIFICATION

(11) **EP 3 571 731 B1**
(45) Date of publication and mention of the grant of the patent: **10.03.2021**
(21) Application number: 18703255.2
(22) Date of filing: 25.01.2018
(51) Int. Cl.: H01M 2/02, H01M 2/04, H01M 2/26, H01M 2/30

(54) **ENERGY STORAGE DEVICE**
ENERGIESPEICHERVORRICHTUNG
DISPOSITIF DE STOCKAGE D'ÉNERGIE

(30) Priority: 30.01.2017 JP 2017013857
(43) Date of publication of application: 27.11.2019
(73) Proprietor: Robert Bosch GmbH, 70442 Stuttgart (DE); GS Yuasa International Ltd., Kisshoin, Minami-ku, Kyoto-shi, Kyoto 601-8520 (JP)
(72) Inventor: ENOMOTO, Yukio, Kyoto-shi Kyoto 601-8520 (JP); KAWATE, Kenji, Kyoto-shi Kyoto 601-8520 (JP)
(74) Representative: Isarpatent
(86) International application number: PCT/EP2018/051895
(87) International publication number: WO 2018/138227

(56) References cited:
- EP-A1- 2 482 363
- EP-A2- 2 166 594

## Description

### TECHNICAL FIELD

The present invention relates to an energy storage device.

### BACKGROUND ART

An energy storage device includes, in general, a case, an electrode assembly accommodated in the inside of the case, and a pair of external terminals mounted on the case and respectively connected to positive and negative electrodes of the electrode assembly. Usually, the connection structure of the external terminals with the electrode assembly projects into the inside of the case. The energy storage device is desirably designed such that even when the energy storage device receives an impact caused by falling or the like, the electrode assembly is not partially strongly compressed and internal short-circuiting does not occur in the structure for connecting the electrode assembly to the external terminals.

From this point of view, there has been proposed an energy storage device where a pair of external terminals is mounted on a lid body, an inner surface of a portion of the lid body disposed between the pair of external terminals is made to project, and a cushion sheet (damping member) is disposed between the projecting portion and an electrode assembly (see JP-A-2004-207089). With such a configuration, when an impact is applied to the energy storage device, the electrode assembly is compressed to the projecting portion of the lid body by way of the cushion sheet. Accordingly, the impact is absorbed by the cushion sheet and the pressure is dispersed to a relatively large area of the projecting portion so that internal short circuiting can be prevented.

EP-A2-2 166 594 describes a secondary battery including an electrode assembly; a can having an opening at an upper portion thereof and housing the electrode assembly; a cap assembly sealing the opening of the can; and an insulation case disposed between the electrode assembly and the cap assembly, the insulation case having an impact absorber configured to deform and absorb an external impact.

EP-A1-2 482 363 describes a rechargeable battery including an electrode assembly, a case accommodating the electrode assembly, a cap plate sealing an opening in the case, and electrode terminals extending through the cap plate at opposite ends of the cap plate.

### PRIOR ART DOCUMENT

### PATENT DOCUMENT

Patent Document 1: JP-A-2004-207089
Patent Document 2: EP-A2-2 166 594
Patent Document 3: EP-A1-2 482 363

### SUMMARY OF THE INVENTION

### PROBLEMS TO BE SOLVED BY THE INVENTION

In the configuration described in the publication, the projecting portion is formed on the lid body and hence, a manufacturing cost of the lid body becomes expensive and a material for manufacturing the lid body is restricted. Alternatively, the use of a spacer that has a separate projecting portion may be considered. In this case, however, it is necessary to seal a case by a lid body after a cushion sheet and the spacer is disposed on an electrode assembly in the inside of the case. Accordingly, an assembling operation of an energy storage device becomes cumbersome. Further, the cushion sheet has low rigidity so that the cushion sheet is unstable whereby the cushion sheet is liable to easily move at the time of disposing the spacer.

It is an object of the present invention to provide an energy storage device where internal short circuiting of an electrode assembly can be prevented while ensuring easy assembling of the energy storage device.

### MEANS FOR SOLVING THE PROBLEMS

The present invention provides an energy storage device according to claim 1 and method for assembling it according to claim 7

### ADVANTAGES OF THE INVENTION

In the energy storage device according to the aspect of the present invention, the cushion sheet is welded to the spacer and hence, the cushion sheet can be accurately disposed while ensuring easily assembling of the energy storage device. Further, with the provision of the cushion sheet, it is possible to prevent the occurrence of a phenomenon that, when an impact is applied to the energy storage device, the electrode assembly is compressed by the external terminals and the like so that internal short circuiting occurs.

### BRIEF DESCRIPTION OF THE DRAWINGS

Fig. 1 is a schematic exploded perspective view showing a configuration of an energy storage device according to one embodiment of the present invention.
Fig. 2 is a schematic exploded perspective view showing a configuration of an energy storage device according to an embodiment different from the configuration shown in Fig. 1.

### MODE FOR CARRYING OUT THE INVENTION

An energy storage device according to an aspect of the present invention includes: an electrode assembly which has an electrode assembly body formed by stacking a positive electrode plate, a separator and a negative electrode plate, and tabs extending from the positive electrode plate and the negative electrode plate; a case formed of a case body which accommodates the electrode assembly therein and a lid plate which closes the case body; an external terminal fixed to the lid plate and electrically connected to the tab; a spacer disposed between the electrode assembly body and the lid plate and having rigidity; and a porous cushion sheet disposed between the spacer and the electrode assembly body having cushioning property, wherein the cushion sheet is welded to the spacer.

In the energy storage device, the cushion sheet is welded to the spacer and hence, the cushion sheet can be accurately disposed while ensuring easy assembling of the energy storage device. Further, with the provision of the cushion sheet, it is possible to prevent the occurrence of a phenomenon that, when an impact is applied to the energy storage device, the electrode assembly is compressed by an end portion of the external terminal positioned in the inside of the case and the connection structure to the external terminals (hereinafter, referred to as "external terminals and the like") and internal short circuiting occurs.

It is preferable that both the spacer and the cushion sheet contain polypropylene. With such a configuration, the spacer and the cushion sheet can be relatively easily welded to each other. Accordingly, the increase of a manufacturing cost of the energy storage device can be suppressed.

The electrode assembly body may be formed by stacking a plurality of plate-like positive electrode plates, a plurality of separators and a plurality of negative electrode plates. In the electrode plate formed by stacking the plurality of plate-like (sheet-like) positive electrode plates, the plurality of separators and the plurality of negative electrode plates, a part of the positive electrode plate, the separator or the negative electrode plate is liable to be easily displaced positionally by an impact. Accordingly, it is possible to acquire an effect of preventing internal short circuiting by the cushion sheet more apparently in the stacked electrode assembly.

The case may have a box shape where respective faces have a rectangular shape. In the case where the box-shaped case is used, compared to a case where a flexible case is used, the case robustly holds the structure for connecting the electrode assembly to the external terminals. When the box-shaped case is used, the electrode assembly is liable to be easily compressed by the external terminals and the like due to an impact and hence, it is possible to acquire an effect of preventing internal short circuiting by the cushion sheet more apparently.

The cushion sheet may be disposed such that the cushion sheet does not overlap with the tabs as viewed in a stacking direction of the electrode assembly body. When the cushion sheet is disposed such that the cushion sheet does not overlap with the tabs, the cushion sheet is small and is liable to be displaced positionally. In this case, an effect that the cushion sheet can be disposed with higher accuracy due to welding of the cushion sheet to the spacer becomes more apparent.

The spacer and the cushion sheet may have a cutout where the tab is disposed. In the case where the spacer and the cushion sheet has the cutout, unless the cushion sheet is welded to the spacer, the cushion sheet is twisted so that the cushion sheet is liable to be inaccurately positioned. In such a case, by welding the cushion sheet to the spacer, an effect of accurately disposing the cushion sheet becomes more apparent.

Hereinafter, an embodiment of the present invention is described in detail with reference to drawings.

### [First embodiment]

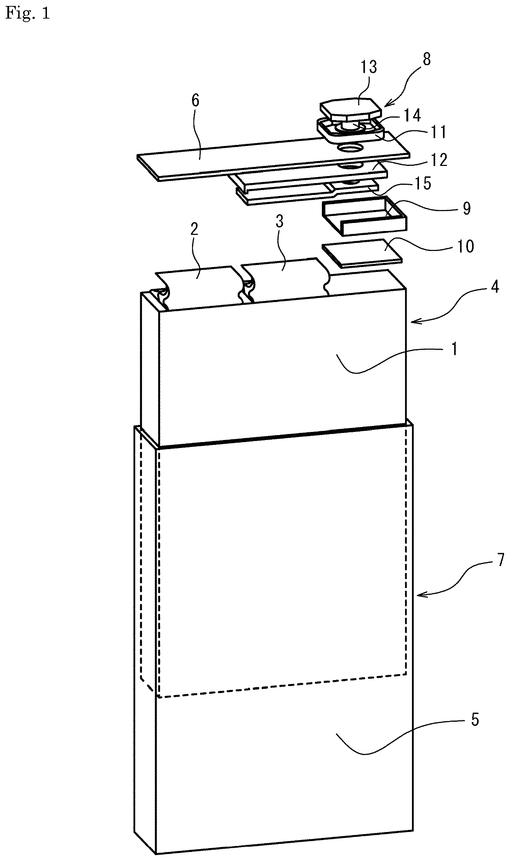

Fig. 1 shows an energy storage device according to one embodiment of the present invention. In this embodiment, a lithium ion secondary battery is exemplified. However, an energy storage device according to the present invention may be a primary battery or a nonaqueous electrolyte secondary battery other than the lithium ion secondary battery, and may be an electrolyte cell such as a capacitor.

The energy storage device includes: an electrode assembly 4 which includes an electrode assembly body 1 formed by staking a positive electrode plate, a separator and a negative electrode plate, and tabs (a positive electrode tab 2 and a negative electrode tab 3) extending from the positive electrode plate and the negative electrode plate respectively; and a case 7 including a case body 5 which accommodates the electrode assembly 4 and a lid plate 6 which closes the case body 5. The energy storage device includes: an external terminal 8 which is fixed to the lid plate 6 and is electrically connected to the negative electrode tab 3; a spacer 9 having rigidity which is disposed between the electrode assembly body 1 and the lid plate 6; and a porous cushion sheet 10 having cushioning property which is disposed between the spacer 9 and the electrode assembly body 1. The spacer 9 has higher rigidity than the cushion sheet 10. The cushion sheet 10 has higher cushioning property than the spacer 9.

In the energy storage device, the cushion sheet 10 is welded to the spacer 9.

The energy storage device is configured such that an electrolyte solution is sealed in the case 7 together with the electrode assembly 4. In the inside of the energy storage device, the electrode assembly 4 is immersed in the electrolyte solution.

The energy storage device may further include: an insulation sheet wound around the electrode assembly body 1; an additional cushion sheet disposed between a bottom portion of the case body 5 and the electrode assembly body 1 and the like.

The electrode assembly body 1 is formed by stacking a plurality of positive electrode plates, a plurality of separators, and a plurality of negative electrode plates together. That is, the electrode assembly 4 of the energy storage device is a stacking-type electrode assembly. To be more specific, the electrode assembly body 1 is formed by stacking the plurality of positive electrode plates and the plurality of negative electrode plates respectively having an approximately rectangular plate shape in such a manner that the positive electrode plate and the negative electrode plate are alternately disposed with the separator interposed between the positive electrode plate and the negative electrode plate.

The positive electrode plate includes a foil-like or a sheet-like positive electrode current collector having conductivity and a positive active material layer stacked on both surfaces of the positive electrode current collector.

As a material for forming the positive electrode current collector of the positive electrode plate, a metal material such as aluminum, copper, iron or nickel, or an alloy of such metal materials is used. Among these metal materials, from a viewpoint of taking a balance between conductivity and a cost, aluminum, an aluminum alloy, copper, and a copper alloy are preferably used, and aluminum and an aluminum alloy are more preferably used. Further, as the shape of the positive electrode current collector, the positive electrode current collector may be formed of a foil, a vapor deposition film or the like. From a viewpoint of a cost, the positive electrode current collector may be formed of a foil. That is, the positive electrode current collector may be preferably formed of an aluminum foil. As aluminum or an aluminum alloy, A1085P, A3003P prescribed in JIS-H4000 (2014) or the like can be exemplified.

The positive active material layer of the positive electrode plate is a porous layer made of a so-called composite material containing a positive active material. A composite material which forms the positive active material layer contains arbitrary components such as a conductive agent, a binding agent (binder), a thickening agent, a filler and the like when necessary.

As the positive active material, for example, a composite oxide expressed by LiₓMO_{y} (M indicating at least one kind of transition metal) (LiₓCoO₂, LiₓNiO₂, LiₓMn₂O₄, LiₓMnO₃, LiₓNi_{α}Co(_{1-α})O₂, LiₓNi_{α}Mn_{β}Co(_{1-α-β})O₂, LiₓNi_{α}Mn(_{2-α})O₄ or the like), or a polyanion compound expressed by Li_{w}Meₓ(XO_{y})_{z} (Me indicating at least one kind of transition metal, X being P, Si, B, V or the like, for example) (LiFePO₄, LiMnPO₄, LiNiPO₄, LiCoPO₄, Li₃V₂(PO₄)₃, Li₂MnSiO₄, Li₂CoPO₄F or the like) can be named. An element or a polyanion in these compounds may be partially replaced with other element or other anion species. In the positive active material layer, one kind of these compounds may be used singly or may be used in a state where two or more kinds of compounds are mixed into a compound. Further, it is preferable that the crystal structure of the positive active material be a layered structure or a spinel structure.

The negative electrode plate includes: a foil-like or a sheet-like negative electrode current collector having conductivity: and a porous negative active material layer stacked on both surfaces of the negative electrode current collector.

As a material for forming the negative electrode current collector of the negative electrode plate, it is preferable to use copper or a copper alloy. Further, as the shape of the negative electrode current collector, a foil is preferable. That is, the negative electrode current collector of the negative electrode plate may preferably be formed of a copper foil. As the copper foil used for forming the negative electrode current collector, a rolled copper foil, an electrolytic copper foil or the like is exemplified, for example.

The negative active material layer is a porous layer made of a so-called composite material containing a negative active material. Further, a composite material which forms the negative active material layer contains arbitrary components such as a conductive agent, a binding agent (binder), a thickening agent, a filler and the like when necessary.

As a negative active material, a material which can occlude and discharge lithium ions is preferably used. As a specific negative active material, metal such as lithium or a lithium alloy; a metal oxide; a polyphosphoric acid compound; a carbon material such as graphite, non-crystalline carbon (easily graphitizable carbon or hardly graphitizable carbon) or the like can be named, for example.

Among the above-mentioned negative active materials, from a viewpoint of setting a discharge capacity per unit opposedly facing area between the positive electrode plate and the negative electrode plate within a preferable range, it is preferable to use Si, an Si oxide, Sn, an Sn oxide or a combination of these materials. It is particularly preferable to use an Si oxide. Si and Sn can have a discharge capacity approximately three times as large as a discharge capacity of graphite when Si and Sn are used in the form of an oxide.

The separator is made of a sheet-like or a film-like material which allows the infiltration of an electrolyte solution into the separator. As a material for forming the separator, a sheet-like or a film-like porous resin is typically used although a woven fabric, a non-woven fabric or the like can be also used. The separator makes the positive electrode plate and the negative electrode plate separate from each other and, at the same time, retains an electrolyte solution between the positive electrode plate and the negative electrode plate.

As a main component of the separator, for example, a polyolefin such as polyethylene (PE), polypropylene (PP), ethylene-vinyl acetate copolymer, ethylene-methylacrylate copolymer, ethylene ethyl acrylate copolymer, a polyolefin derivative such as chlorinated polyethylene or an ethylene-propylene copolymer; polyester such as polyethylene terephthalate or copolymerized polyester and the like can be adopted. Among these main components of the separator, polyethylene and polypropylene which are excellent in electrolyte resistance, durability, and weldability are particularly preferably used.

It is preferable that the separator have a heat resistance layer on both surfaces or one surface thereof (preferably, a surface which opposedly faces the positive electrode plate). With such a configuration, breaking of the separator due to heat can be prevented and hence, short-circuiting between the positive electrode plate and the negative electrode plate can be prevented with more certainty.

The heat resistance layer of the separator may be configured to contain a large number of inorganic particles, and binders which connects the inorganic particles to each other.

As a main component of the inorganic particles, for example, an oxide such as alumina, silica, zirconia, titania, magnesia, ceria, yttria and zinc oxide, iron oxide; a nitride such as silicon nitride, titanium nitride and boron nitride; silicon carbide, calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, and the like can be named. Among these main components, as the main component of the inorganic particles of the heat resistance layer, alumina, silica, and titania are particularly preferable.

The tabs 2, 3 can be formed by extending the positive electrode current collector of the positive electrode plate and the negative electrode current collector of the negative electrode plate in a projecting manner in a strip shape respectively from rectangular regions where active material layers are stacked. The positive electrode tab 2 extending from the positive electrode plate is electrically connected to the lid plate 6. On the other hand, the negative electrode tab 3 extending from the negative electrode plate is electrically connected to the external terminal 8. The tab 2, 3 may be formed by stacking the plurality of positive electrode current collectors extending from the plurality of positive electrode plates or the plurality of negative current collectors extending from the plurality of negative electrode plates in a bundle. The tab 2, 3 may be connected to the lid plate or the external terminal in a state where the tab 2, 3 is formed by stacking the plurality of current collectors in a bundle and by bending the current collectors in a C shape in the inside of the case 7. The number of current collectors (tabs) to be stacked in a bundle may be set 40 to 60, or may be an approximately 50 from a viewpoint of a demand for higher capacity of the energy storage device.

In this embodiment, the tabs 2, 3 project from one side of the electrode assembly body 1 having a rectangular shape as viewed in a stacking direction of the electrode assembly body 1 such that the tabs 2, 3 do not overlap with each other as viewed in the stacking direction.

As the electrolyte solution sealed in the case 7 together with the electrode assembly 4, a known electrolyte solution which is usually used for an energy storage device can be used. For example, a solution can be used where lithium hexafluorophosphate (LiPF₆) or the like is dissolved in a solvent containing a cyclic carbonate such as an ethylene carbonate (EC), a propylene carbonate (PC) and a butylene carbonate (BC); or a chain carbonate such as a diethyl carbonate (DEC), a dimethyl carbonate (DMC) and an ethyl-methyl carbonate (EMC).

As described above, the case 7 includes the case body 5 and the lid plate 6 on which the external terminal 8 is mounted. The lid plate 6 is gas-tightly fixed to the case body 5 thus hermetically closing the case body 5 so as to prevent leakage of an electrolyte solution in the case body 5.

As a shape of the case 7, it is preferable that the case 7 have a box shape (rectangular parallelepiped shape) where respective faces have a rectangular shape. In the case where the electrode assembly 4 is accommodated in the box-shaped case 7, the external terminal 8 fixed to the lid plate 6 or the connection structure for connecting the negative electrode tab 3 to the external terminal 8 projects to the inside of the case 7 so that the electrode assembly 4 is liable to be locally pressed by the external terminal 8 or the connection structure. Accordingly, an effect of protecting the electrode assembly 4 acquired by accurately arranging the cushion sheet 10 becomes more apparent.

It is preferable that the case 7 include a breakable valve (rupture valve) on the bottom portion of the case body 5 or on the lid plate 6. The rupture valve opens when an internal pressure of the case 7 is increased and releases a pressure.

The case body 5 of the case 7 is formed into a bottomed cylindrical shape such that the case body 5 can accommodate the electrode assembly 4. That is, the case body 5 is formed of a cylindrical portion and a bottom plate which closes a bottom portion of the cylindrical portion. As a material for forming the case body 5, metal such as aluminum or an aluminum alloy, a resin or the like can be used, for example.

In this embodiment, the positive electrode tab 2 is electrically connected to the lid plate 6 of the case 7 so that the lid plate 6 is used as a positive electrode external terminal. Accordingly, it is sufficient that the lid plate 6 be formed of a plate member having strength and conductivity. The lid plate 6 may be formed using a metal-plated steel plate, a stainless steel plate, an aluminum plate or the like, for example. An aluminum plate is typically used for forming the lid plate 6.

Although a method of connecting the positive electrode tab 2 to the lid plate 6 is not particularly limited, welding is typically used.

The negative electrode tab 3 is connected to the external terminal 8 so that the external terminal 8 is used as a negative electrode external terminal. Accordingly, the external terminal 8 is gas-tightly fixed to the lid plate 6 with an insulating outer gasket 11 and an insulating inner gasket 12 sandwiched therebetween so as to prevent the external terminal 8 from electrically contacting with the lid plate 6 which is used as the positive electrode external terminal and to prevent leakage of an electrolyte solution.

As a material for forming the external terminal 8, a material having conductivity is used. Further, it is preferable that at least a portion of the external terminal 8 which is exposed to the inside of the case 7 be made of the same kinds of metal as the negative electrode current collector.

The external terminal 8 may be formed of: a plate-like terminal portion 13 which is disposed outside the lid plate 6; a shaft portion 14 which penetrates the lid plate 6; and a plate-like connecting portion 15 which is disposed inside the lid plate 6 substantially parallel to the lid plate 6 and to which the negative electrode tab 3 is connected. By extending the plate-like connecting portion 15 along the lid plate 6 in this manner, it is possible to increase the degree of freedom in setting the position where the negative electrode tab 3 is disposed on the electrode assembly body 1.

In this embodiment, the negative electrode tab 3 is connected to a surface of the connecting portion 15 of the external terminal 8 on a side opposite to the electrode assembly body 1. Accordingly, the connecting portion 15 is slightly bent such that a region of the connecting portion 15 to which the negative electrode tab 3 is connected is offset toward an electrode assembly body 1 side.

The spacer 9 is disposed between the electrode assembly body 1 and the lid plate 6, preferably between the external terminal 8 and the electrode assembly body 1 while avoiding areas where the tabs 2, 3 extend. In this embodiment, for example, the spacer 9 is disposed such that the spacer 9 does not overlap with the tabs 2, 3 as viewed in the stacking direction of the electrode assembly body 1.

The spacer 9 is provided for preventing the occurrence of short-circuiting by keeping a distance between the electrode assembly body 1 and the lid plate 6 and the external terminal 8.

Accordingly, the spacer 9 is made of a material having insulating property, and is preferably made of a resin composition. To be more specific, the spacer 9 preferably contains polypropylene. Since the spacer 9 contains polypropylene, the cushion sheet 10 can be relatively easily welded to the spacer 9.

As in the case of this embodiment, the spacer 9 may be formed into a shape with which the spacer 9 can be positioned by being fitted on the external terminal 8 (connecting portion 15). In this manner, by allowing the spacer 9 to have the fitting structure with respect to the external terminal 8, even when the spacer 9 is configured such that the spacer 9 does not overlap with the tabs 2, 3 as viewed in the stacking direction of the electrode assembly body 1 and the spacer 9 cannot be positioned by four walls of the case body 5, it is possible to prevent displacement of the spacer 9. Further, by disposing the spacer 9 partially as viewed in the stacking direction of the electrode assembly body 1, the tabs 2, 3 can be easily arranged and hence, a distance between the electrode assembly body 1 and the lid plate 6 can be decreased thus enabling the miniaturization of the energy storage device.

An effective thickness of the spacer 9 (a thickness of a portion of the spacer 9 which overlaps with the electrode assembly body 1 and the external terminal 8) can be set within a range of from 0.5 mm to 2.0 mm inclusive, for example. With such a configuration, insulation can be ensured between the electrode assembly body 1 and the external terminal 8.

The cushion sheet 10 may preferably be made of a sponge-like foamed body having independent pores. With such a configuration, the cushion sheet 10 is formed in a resiliently compressible manner. The cushion sheet 10 is welded to a surface of the spacer 9 which opposedly faces the electrode assembly body 1.

In this manner, since the cushion sheet 10 is welded to the spacer 9, the cushion sheet 10 can be accurately disposed at a predetermined position in the inside of the case 7. When the cushion sheet 10 is a sponge-like sheet, there is a concern that the cushion sheet 10 is absorbed by a vacuum pad or the like at the time of assembling the energy storage device so that handling of the cushion sheet 10 becomes difficult. In this embodiment, however, the cushion sheet 10 is welded to the spacer 9, the cushion sheet 10 can be handled together with the spacer 9 and hence, the energy storage device can be easily and accurately assembled.

The cushion sheet 10 may preferably be disposed within a range where the cushion sheet 10 substantially overlaps with the spacer 9 as viewed in a normal direction of the lid plate 6. That is, the cushion sheet 10 is preferably disposed so as not to overlap with the tabs 2, 3 as viewed in the stacking direction of the electrode assembly body 1. In this embodiment, one side of the electrode assembly body 1 having a rectangular shape as viewed in the stacking direction is divided into a region where the positive electrode tab 2 is disposed, a region where the negative electrode tab 3 is disposed, and a region where the cushion sheet 10 is disposed. In this manner, by disposing the cushion sheet 10 so as not to overlap with the tabs 2, 3 as viewed in the stacking direction of the electrode assembly body 1, the tabs 2, 3 can be easily arranged and hence, a distance between the electrode assembly body 1 and the lid plate 6 can be decreased thus enabling the miniaturization of the energy storage device.

An average thickness of the cushion sheet 10 can be set within a range of from 0.5 mm to 2.0 mm inclusive, for example. With such a configuration, a force acting on the electrode assembly body 1 can be dispersed thus surely preventing the occurrence of internal short circuiting of the electrode assembly body 1.

As a material for forming the cushion sheet 10, a resin which is the same in kind as a resin for forming the spacer 9, that is, a resin containing a polymer having polypropylene or a propylene unit is typically used. The cushion sheet 10 and the spacer 9 contain the same material and hence, the cushion sheet 10 and the spacer 9 can be easily welded to each other by ultrasonic welding. Accordingly, it is possible to prevent a drawback that the spacer 9 is deformed due to generated heat. Further, the cushion sheet 10 contains a polymer having polypropylene or propylene unit and hence, the cushion sheet 10 can be easily formed into a porous body.

A material for forming the cushion sheet 10 may preferably be a material which contains a resin which has large deformability thus being capable of enhancing cushioning property or may preferably be a resin having a structural unit with which flexibility of the cushion sheet 10 can be enhanced. As a resin which can enhance cushioning property, polyethylene or the like can be named, for example. As a resin having a structural body with which flexibility can be enhanced, ethylene-propylene copolymer or the like can be named, for example.

The Asker C hardness of the cushion sheet 10 is preferably set within a range of from 5 to 40 inclusive. Apparent density of the cushion sheet 10 is preferably set within a range of from 0.09 g/cm³ to 0.18 g/cm³ inclusive.

To be more specific, as the cushion sheet 10, for example, rubber sponges "E4088", "E4488" made by INOAC CORPORATION and the like, for example can be used.

The welding of the cushion sheet 10 to the spacer 9 may be performed by spot welding. As a method of welding the cushion sheet 10 to the spacer 9, ultrasonic welding is also preferably used. With the use of ultrasonic welding, the increase of a temperature of the cushion sheet 10 is suppressed and hence, it is possible to prevent the cushion sheet 10 from losing cushioning property.

Such welding of the cushion sheet 10 to the spacer 9 can be performed using an ultrasonic welding device "AG395300" made by Adwelds Corporation, for example, under a condition that an oscillation frequency is set to 39.5 kHz and an output is set within a range of from 150W to 360W inclusive.

As has been described heretofore, since the cushion sheet 10 is welded to the spacer 9, the energy storage device can be easily and accurately assembled thus preventing the occurrence of internal short circuiting of the electrode assembly 4 with the provision of the cushion sheet 10.

### [Second embodiment]

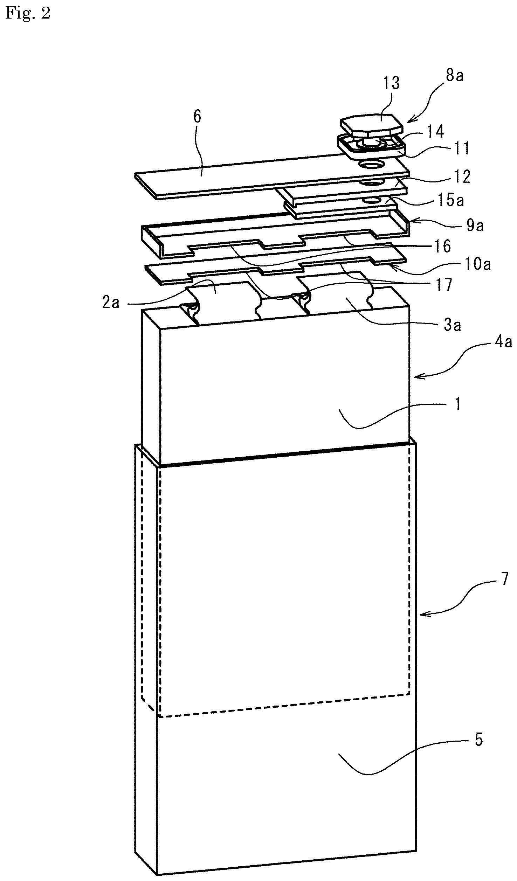

Fig. 2 shows an energy storage device according to another embodiment which differs from the energy storage device of the present invention shown in Fig. 1. The energy storage device according to this embodiment includes: an electrode assembly 4a which has an electrode assembly body 1 and tabs (a positive electrode tab 2a and a negative electrode tab 3a); a case 7 which accommodates the electrode assembly 4a therein; an external terminal 8a fixed to a lid plate 6 and electrically connected to the negative electrode tab 3a; a spacer 9a disposed between the electrode assembly body 1 and the lid plate 6 and having rigidity; and a porous cushion sheet 10a disposed between the spacer 9a and the electrode assembly body 1, welded to the spacer 9a, and having cushioning property.

With respect to the energy storage device shown in Fig. 2, constitutional elements identical with the constitutional elements of the energy storage device shown in Fig. 1 are given the same symbols, and the repeated description of these constitutional elements is omitted.

The electrode assembly 4a of the energy storage device shown in Fig. 2 has substantially the same configuration as the electrode assembly 4 in the energy storage device shown in Fig. 1 except for the difference in arrangement of tabs 2a, 3a.

The tabs 2a, 3a project from one side of the electrode assembly body 1a having a rectangular shape as viewed in a stacking direction of the electrode assembly body 1a such that the tabs 2a, 3a are arranged substantially in symmetry with reference to the center of the above-mentioned one side.

In the external terminal 8a of the energy storage device shown in Fig. 2, a connecting portion 15a is disposed corresponding to a position where the above-mentioned negative electrode tab 3a extends. Accordingly, the connecting portion 15a of the external terminal 8a of the energy storage device shown in Fig. 2 becomes shorter than the connecting portion 15 of the external terminal 8 of the energy storage device shown in Fig. 1.

In this embodiment, the negative electrode tab 3a is connected to a surface of the connecting portion 15a of the external terminal 8a on an electrode assembly body 1 side. Accordingly, unlike the connecting portion 15 of the external terminal 8 of the energy storage device shown in Fig. 1, the connecting portion 15a of the external terminal 8a of the energy storage device shown in Fig. 2 is not bent.

The spacer 9a of the energy storage device shown in Fig. 2 includes a pair of cutouts 16 which defines spaces where the tabs 2a, 3a are disposed. Other configuration of the spacer 9a of the energy storage device shown in Fig. 2 can be formed substantially equal to the corresponding configuration of the spacer 9 of the energy storage device shown in Fig. 1.

In this embodiment, as described above, the spaces which allow the tabs 2a, 3a to pass therethrough are ensured by the cutouts 16 of the spacer 9a. Accordingly, the spacer 9a can be positioned by being brought into contact with four walls of the case body 5. Further, an area of the spacer 9a can be relatively increased and hence, the electrode assembly body 1 can be held in a relatively stable manner.

In the energy storage device shown in Fig. 2, the cushion sheet 10a is welded to a surface of the above-mentioned spacer 9a on an electrode assembly body 1 side.

The cushion sheet 10a has a shape substantially equal to a shape of the spacer 9a as viewed in a normal direction of the lid plate 6, and the cushion sheet 10a includes a pair of cutouts 17 where the tabs 2a, 3a are disposed corresponding to the cutouts 16 of the spacer 9a. Other configuration of the cushion sheet 10a of the energy storage device shown in Fig. 2 can be formed substantially equal to the corresponding configuration of the cushion sheet 10 of the energy storage device shown in Fig. 1.

With respect to the energy storage device shown in Fig. 2, the cushion sheet 10a is welded to the spacer 9a similarly to the energy storage device shown in Fig. 1. Accordingly, the energy storage device shown in Fig. 2 can be easily and accurately assembled. Further, with the provision of the cushion sheet 10a, the occurrence of internal short circuiting of the electrode assembly 4a can be prevented.

### [Other embodiments]

The above-mentioned embodiments are not intended to limit the scope of the present invention. Accordingly, it should be construed that the above-mentioned embodiments can be modified by omission, replacement or addition of constitutional elements of respective parts of the embodiments based on the description of this specification and the common general technical knowledge, and all these modifications also fall within the scope of the present invention.

An electrode assembly body of the energy storage device may be a winding-type electrode assembly body which is formed by winding a stacked body formed of an elongated positive electrode plate, an elongated separator, an elongated negative electrode plate, and an elongated separator.

The energy storage device may be configured such that the energy storage device further includes a positive electrode external terminal fixed to the lid plate, and a positive electrode tab is electrically connected to the positive electrode external terminal.

The energy storage device may be an energy storage device which uses a solid electrolyte.

In such an energy storage device, an additional member which supports an electrical connection may be interposed between the external terminal and the lid plate and the tab.

In the energy storage device, the tab is not limited to a tab formed by extending a current collector of an electrode plate, and the tab may be formed of a different conductive member which is sandwiched between the electrode plate and the separator. Further, the arrangement of the positive electrode tab and the negative electrode tab may be determined as desired.

### INDUSTRIAL APPLICABILITY

The present invention is preferably applicable to a lithium ion secondary battery and the like, for example.

### DESCRIPTION OF REFERENCE SIGNS

1: electrode assembly body
2, 2a: positive electrode tab
3, 3a: negative electrode tab
4, 4a: electrode assembly
5: case body
6: lid plate
7: case
8, 8a: external terminal
9, 9a: spacer
10, 10a: cushion sheet
11, 12: gasket
13: terminal portion
14: shaft portion
15, 15a: connecting portion
16: cutout
17: cutout

## Claims

1. An energy storage device comprising:
an electrode assembly (4, 4a) which has an electrode assembly body (1) formed by stacking a positive electrode plate, a separator and a negative electrode plate, and tabs (2, 2a, 3, 3a) extending from the positive electrode plate and the negative electrode plate;
a case (7) formed of a case body (5) which accommodates the electrode assembly (4, 4a) therein and a lid plate (6) which closes the case body (5);
an external terminal (8, 8a) fixed to the lid plate (6) and electrically connected to the tab (2, 2a, 3, 3a);
a spacer (9, 9a) disposed between the electrode assembly body (1) and the lid plate (6), the spacer (9, 9a) having rigidity; and
a porous cushion sheet (10, 10a) disposed between the spacer (9, 9a) and the electrode assembly body (1), the cushion sheet (10, 10a) having cushioning property,
wherein the cushion sheet (10, 10a) is welded to the spacer (9, 9a).

2. The energy storage device according to claim 1, wherein both the spacer (9, 9a) and the cushion sheet (10, 10a) contain polypropylene.

3. The energy storage device according to claim 1 or claim 2, wherein the electrode assembly body (1) is formed by stacking a plurality of plate-like positive electrode plates, a plurality of separators and a plurality of negative electrode plates.

4. The energy storage device according to claim 1, claim 2 or claim 3, wherein the case (7) has a box shape where respective faces have a rectangular shape.

5. The energy storage device according to any one of claims 1 to 4, wherein the cushion sheet (10, 10a) is disposed such that the cushion sheet (10, 10a) does not overlap with the tabs (2, 2a, 3, 3a) as viewed in a stacking direction of the electrode assembly body (1).

6. The energy storage device according to any one of claims 1 to 4, wherein the spacer (9a) and the cushion sheet (10a) has a cutout (16, 17) where the tab (2a, 3a) is disposed.

7. Method for assembling the energy storage device according to any one of claims 1 to 6, comprising:
welding the cushion sheet (10, 10a) to the spacer (9, 9a);
forming the electrode assembly body (1) by stacking the positive electrode plate, the separator and the negative electrode plate;
disposing the electrode assembly (4, 4a) into the case body (5);
disposing the spacer (9, 9a), to which the cushion sheet (10, 10a) is welded, onto the electrode assembly (4, 4a) by means of a vacuum pad;
forming the case (7) by closing the case body (5) with the lid plate (6); and
fixing the external terminal (8, 8a) to the lid plate (6) so that the external terminal (8, 8a) is electrically connected to the tab (2, 2a, 3, 3a).

## Patentansprüche

1. Energiespeichervorrichtung, umfassend:
eine Elektrodenanordnung (4, 4a), die einen Elektrodenanordnungskörper (1) aufweist, der durch Stapeln einer Plus-Elektrodenplatte, eines Separators und einer Minus-Elektrodenplatte gebildet ist, und Laschen (2, 2a, 3, 3a), die sich von der Plus-Elektrodenplatte und der Minus-Elektrodenplatte erstrecken;
ein Gehäuse (7), das aus einem Gehäusekörper (5), der die Elektrodenanordnung (4, 4a) darin aufnimmt, und einer Deckelplatte (6), die den Gehäusekörper (5) verschließt, gebildet ist;
ein externes Endgerät (8, 8a), das an der Deckelplatte (6) befestigt und elektrisch mit der Lasche (2, 2a, 3, 3a) verbunden ist;
einen Abstandshalter (9, 9a), der zwischen dem Elektrodenanordnungskörper (1) und der Deckelplatte (6) angeordnet ist, wobei der Abstandshalter (9, 9a) Steifigkeit aufweist; und
eine poröse Polsterfolie (10, 10), die zwischen dem Abstandshalter (9, 9a) und dem Elektrodenanordnungskörper (1) angeordnet ist, wobei die Polsterfolie (10, 10a) Dämpfungseigenschaften aufweist,
wobei die Polsterfolie (10, 10a) mit dem Abstandshalter (9, 9a) verschweißt ist.

2. Energiespeichervorrichtung gemäß Anspruch 1, wobei sowohl der Abstandshalter (9, 9a) als auch die Polsterfolie (10, 10a) Polypropylen enthalten.

3. Energiespeichervorrichtung gemäß Anspruch 1 oder Anspruch 2, wobei der Elektrodenanordnungskörper (1) durch Stapeln einer Vielzahl von plattenförmigen Plus-Elektrodenplatten, einer Vielzahl von Separatoren und einer Vielzahl von Minus-Elektrodenplatten gebildet ist.

4. Energiespeichervorrichtung gemäß Anspruch 1, Anspruch 2 oder Anspruch 3, wobei das Gehäuse (7) eine Kastenform aufweist, bei der die jeweiligen Flächen eine rechteckige Form aufweisen

5. Energiespeichervorrichtung gemäß einem der Ansprüche 1 bis 4, wobei die Polsterfolie (10, 10a) so angeordnet ist, dass die Polsterfolie (10, 10a) in einer Stapelrichtung des Elektrodenanordnungskörpers (1) gesehen nicht die Laschen (2, 2a, 3, 3a) überlappt.

6. Energiespeichervorrichtung gemäß einem der Ansprüche 1 bis 4, wobei der Abstandshalter (9a) und die Polsterfolie (10a) einen Ausschnitt (16, 17) aufweisen, in dem die Lasche (2a, 3a) angeordnet ist.

7. Verfahren zum Zusammensetzen der Energiespeichervorrichtung gemäß einem der Ansprüche 1 bis 6, umfassend:
Verschweißen der Polsterfolie (10, 10a) mit dem Abstandshalter (9, 9a);
Bilden des Elektrodenanordnungskörpers (1) durch Stapeln der Plus-Elektrodenplatte, des Separators und der Minus-Elektrodenplatte;
Einsetzen der Elektrodenanordnung (4, 4a) in den Gehäusekörper (5);
Anordnen des Abstandshalters (9, 9a), an den die Polsterfolie (10, 10a) angeschweißt ist, auf der Elektrodenanordnung (4, 4a) durch ein Vakuumkissen; Bilden des Gehäuses (7) durch Schließen des Gehäusekörpers (5) mit der Deckelplatte (6); und
Befestigen des externen Endgerätes (8, 8a) an der Deckelplatte (6), sodass das externe Endgerät (8, 8a) elektrisch mit der Lasche (2, 2a, 3, 3a) verbunden ist.

## Revendications

1. Dispositif de stockage d'énergie, comprenant :
un ensemble électrode (4, 4a) qui a un corps d'ensemble électrode (1) formé en empilant une plaque électrode positive, un séparateur et une plaque électrode négative, et des languettes (2, 2a, 3, 3a) s'étendant à partir de la plaque électrode positive et de la plaque électrode négative ;
un boîtier (7) formé d'un corps de boîtier (5) qui loge l'ensemble électrode (4, 4a) dans celui-ci et une plaque couvercle (6) qui ferme le corps de boîtier (5), une borne externe (8, 8a) fixée à la plaque couvercle (6) et électriquement connectée à la languette (2, 2a, 3, 3a) ;
une pièce d'espacement (9, 9a) disposée entre le corps d'ensemble électrode (1) et la plaque couvercle (6), la pièce d'espacement (9, 9a) ayant une rigidité ; et
une feuille d'amortissement poreuse (10, 10a) disposée entre la pièce d'espacement (9, 9a) et le corps d'ensemble électrode (1), la feuille d'amortissement (10, 10a) ayant une propriété d'amortissement,
dans lequel la feuille d'amortissement (10, 10a) est soudée à la pièce d'espacement (9, 9a).

2. Dispositif de stockage d'énergie selon la revendication 1, dans lequel la pièce d'espacement (9, 9a) et la feuille d'amortissement (10, 10a) contiennent tous les deux du polypropylène.

3. Dispositif de stockage d'énergie selon la revendication 1 ou la revendication 2, dans lequel le corps d'ensemble électrode (1) est formé en empilant une pluralité de plaques électrodes positives en forme de plaque, une pluralité de séparateurs et une pluralité de plaques électrodes négatives.

4. Dispositif de stockage d'énergie selon la revendication 1, la revendication 2 ou la revendication 3, dans lequel le boîtier (7) a une forme de boîte où des faces respectives ont une forme rectangulaire.

5. Dispositif de stockage d'énergie selon l'une quelconque des revendications 1 à 4, dans lequel la feuille d'amortissement (10, 10a) est disposée de telle sorte que la feuille d'amortissement (10, 10a) ne chevauche pas les languettes (2, 2a, 3, 3a) en vue dans une direction d'empilage du corps d'ensemble électrode (1).

6. Dispositif de stockage d'énergie selon l'une quelconque des revendications 1 à 4, dans lequel la pièce d'espacement (9a) et la feuille d'amortissement (10a) ont une découpe (16, 17) où la languette (2a, 3a) est disposée.

7. Procédé pour assembler le dispositif de stockage d'énergie selon l'une quelconque des revendications 1 à 6, comprenant :
le soudage de la feuille d'amortissement (10, 10a) à la pièce d'espacement (9, 9a),
la formation du corps d'ensemble électrode (1) en empilant la plaque électrode positive, le séparateur et la plaque électrode négative ;
la disposition de l'ensemble électrode (4, 4a) dans le corps de boîtier (5) ;
la disposition de la pièce d'espacement (9, 9a), à laquelle la feuille d'amortissement (10, 10a) est soudée, sur l'ensemble électrode (4, 4a) au moyen d'une ventouse ;
la formation du boîtier (7) en fermant le corps de boîtier (5) avec la plaque couvercle 6) ; et
la fixation de la borne externe (8, 8a) à la plaque couvercle (6) de telle sorte que la borne externe (8, 8a) soit électriquement connectée à la languette (2, 2a, 3, 3a).
